# EUROPÄISCHE PATENTSCHRIFT

(11) **EP 0 322 433 B1**
(45) Veröffentlichungstag und Bekanntmachung des Hinweises auf die Patenterteilung: **25.09.1996**
(21) Anmeldenummer: 88905679.2
(22) Anmeldetag: 01.07.1988
(51) Int. Cl.: B64F 1/26

(54) **SCHUTZANLAGE ZUR SCHALLDÄMPFUNG VON FLUGZEUGTRIEBWERKSGERÄUSCHEN IN EINGEBAUTEM ZUSTAND BEI HOHEN GASSTRÖMEN**
PROTECTIVE SYSTEM FOR REDUCING THE NOISE OF HIGH-VELOCITY JET STREAMS FROM INBUILT POWER UNITS IN AIRCRAFT
DISPOSITIF PROTECTEUR AMORTISSEUR DES BRUITS DE PROPULSEURS INCORPORES D'AVIONS PRODUISANT DES COURANTS DE GAZ DE HAUTE VITESSE

(30) Priorität: 03.07.1987 DE 3722112
(43) Veröffentlichungstag der Anmeldung: 05.07.1989
(73) Patentinhaber: Rheinhold & Mahla AG, 80992 München (DE)
(72) Erfinder: SCHAFHAUPT, Horst, D-8081 Egenhofen (DE)
(74) Vertreter: Rau, Manfred, Dr. Dipl.-Ing.
(86) Internationale Anmeldenummer: DE8800409
(87) Internationale Veröffentlichungsnummer: WO8900130

(56) Entgegenhaltungen:
- DE-A- 2 619 486
- DE-C- 3 023 707
- GB-A- 1 089 630
- US-A- 3 096 847

## Beschreibung

Die Erfindung bezieht sich auf eine Schutzanlage nach dem Oberbegriff des Anspruches 1.

Aus der DE-C-30 23 707 ist eine derartige Schutzanlage bekannt, bei der die bei einem Probebetrieb von Flugzeugtriebwerken austretenden Gasströme mit hoher Geräuschintensität durch ein gitterförmiges Leitelement strömen, wobei sie nach oben abgelenkt werden, ohne daß die Gefahr einer Rückströmung zum Triebwerk hin auftritt Der Schall wird verhältnismäßig ungebrochen durch das Leitelement bis zur Absorption durch die Schallabsorptionswand geleitet. Zusammen mit seitlichen Schallabsorptionswänden bildet diese hintere Schallabsorptionswand eine ein Flugzug hufeisenförmig umgebende Schallabsorptionswand, durch die der nach hinten und seitwärts austretende Schall ausreichend absorbiert wird. Diese bekannte Schutzanlage ist nicht geeignet, auch die aus dem Triebwerksansaugbereich abgestrahlten Geräusche zu mindern und darüber hinaus störende Windbelästigungen, die unter Umständen auch einen Triebwerkstest verhindern könnten, zu reduzieren.

Aus der US-A-3 096 847 ist eine Schutzanlage zur Schalldämpfung großer Gasströme hoher Geschwindigkeiten bekannt, die angenähert in Hufeisenform angeordnete Wände aufweist. An den vorderen Stirnseiten der seitlichen Wände sind zwei schwenkbare Torflügel angelenkt. Die Wände und Torflügel dieser Schutzanlage weisen einen dreieckförmigen Querschnitt auf und sind an ihren Innenseiten mit aus schallundurchlässigen Platten gebildeten Prallflächen versehen, die Schallwellen nach oben reflektieren sollen.

Der Erfindung liegt die Aufgabe zugrunde, die Schutzanlage nach dem Oberbegriff des Anspruches 1 so auszugestalten, daß Schallabstrahlungen nach allen Seiten reduziert werden.

Diese Aufgabe wird erfindungsgemäß durch die Merkmale im Kennzeichnungsteil es Anspruches 1 gelöst. Durch die erfindungsgemäßen Maßnahmen wird sichergestellt, daß die bei Triebwerkstesten aus der Schutzanlage austretenden Geräusche stark reduziert sind.

Die Unteransprüche geben vorteilhafte Ausgestaltungen wieder.

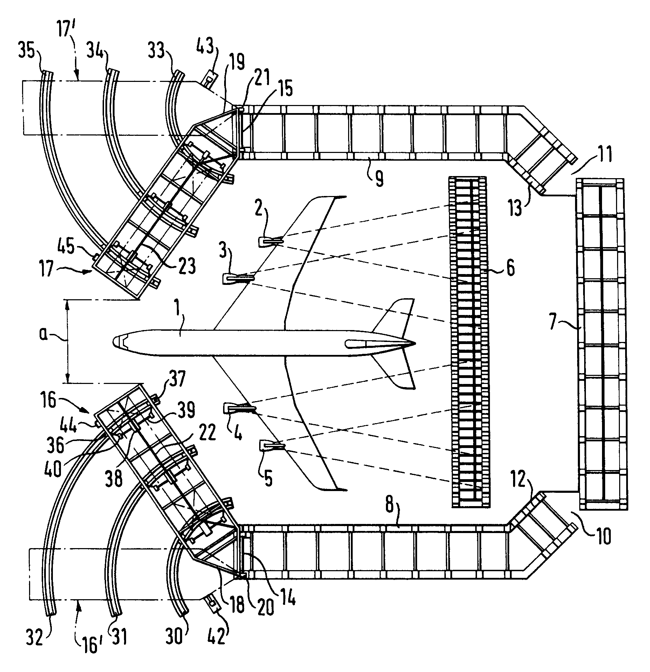

Anhand einer schematischen Zeichnung sind Aufbau und Wirkungsweise eines Ausführungsbeispieles nach der Erfindung näher erläutert. Dabei zeigt die Zeichnung eine Draufsicht auf die Gesamtanlage mit zum Triebwerkstest aufgestelltem Flugzeug.

Wie man aus der Zeichnung ersieht, ist hinter dem Flugzeug 1 mit beispielsweise 4 Triebwerken 2, 3, 4, und 5 zunächst ein gitterförmiges Leitelement in Form eines schalltransparenten Streckmetall-Gitters 6 aufgestellt, und zwar entgegen der Anströmrichtung abgeneigt, so daß die aus den Triebwerken 2 - 5 austretenden Gasströme nach oben umgelenkt werden, während die Schallwellen mehr oder weniger ungehindert auf eine dahinter angeordnete hintere Schallabsorptionswand 7 auftreffen und dort weitgehend absorbiert werden. Seitlich vom Flugzeug 1 sind je eine weitere seitliche Schallabsorptionswand 8 und 9 aufgestellt, die am hinteren Ende unter Freilassung eines schallwirksam abgedeckten Spaltes 10 bzw. 11 über schräg nach innen abgewinkelte Ansätze 12 und 13 insgesamt eine das Flugzeug 1 hufeisenförmig umgebende Schallabsorptionswand bilden.

Damit sind die Abstrahlgeräusche der Triebwerke 2 - 5 weitgehend gedämpft. Aus dem Triebwerksansaugbereich abgestrahlte Geräusche können jedoch bei einer derartigen Bauweise frei nach vorn austreten und führen damit zu einer erheblichen Geräuschbelästigung. Aus diesem Grunde ist erfindungsgemäß vorgesehen, daß an den vorderen Stirnseiten 14 und 15 der seitlichen Schallabsorptionswände 8 und 9 noch schwenkbare Torflügel 16 und 17 angelenkt sind, die zumindest auf der Innenseite mit Schallabsorptionsmaterial belegt sind. Diese Torflügel 16 und 17 haben in Draufsicht eine rechteckige Form und weisen am hinteren Ende einen dreieckigen Ansatz 18 und 19 auf, dessen Dreiecksspitze die jeweilige Schwenkachse 20 und 21 der Torflügel 16 und 17 bilden. Der Spitzenwinkel dieser dreieckigen Ansätze 18 und 19 ist dabei so bemessen und die Schwenkachsen 20 und 21 sind dabei so im Abstand von den Schallabsorptionswänden 8 und 9 nach außen gelegt, daß die Torflügel 16 und 17 um etwa 60° nach innen geschwenkt werden können, so daß dann in der Mitte stehende Schallabsorptionswandungen 22 und 23 der Torflügel 16 und 17 spaltfrei an die Absorptionswände 8 und 9 anschließen.

Die Torflügel 16 und 17 sind auf beispielsweise drei Laufschienen 30, 31, und 32 bzw. 33, 34 und 35 geführt, wobei diese Laufschienen 30 - 35 teilkreisbogenförmig konzentrisch zur Schwenkachse 20 bzw. 21 verlaufen.

Die beispielsweise in der Laufschiene 32 geführten Rollen 36 und 37 werden über einen Motor 38, eine Gelenkwelle 39 und Winkelgetriebe 40 angetrieben, wobei jeder Laufschiene 30 - 35 und den darin angeordneten Rollen 36, 37 ein eigener Antrieb zugeordnet sein kann, und alle Antriebe auf die jeweils erforderliche Drehzahl der Rollen 36, 37 in den auf unterschiedlichen Radien zu den Schwenkachsen 20, 21 liegenden Laufschienen 30 - 35 abgestuft synchronisiert sind.

Die Torflügel 16 und 17 weisen dabei eine solche Länge auf, daß im eingeschwenkten Zustand noch ein ausreichender Spalt (a) für den Bug des Flugzeuges 1 freibleibt.

Die geöffnete Stellung der Torflügel 16 und 17 ist durch die strichpunktierte Kontur 16' und 17' angedeutet, wobei die Schwenkbewegung der Torflügel 16 und 17 durch entsprechende Endschalter 42 und 43 begrenzt ist.

Selbstverständlich lassen sich diese Torflügel 16 und 17 auch manuell öffnen, wobei für die Ankoppelung eines entsprechenden Schleppfahrzeuges Hakenansätze 44 und 45 vorgesehen sind.

Mit der beschriebenen Anordnung wird bei eingeschwenkten Torflügeln 16, 17 eine Geräuschbelästigung der im Umkreis befindlichen Anlieger zumindest auf ein erträgliches Maß reduziert. Darüberhinaus können störende Windbelästigungen, die u.U. auch einen Triebwerkstest verhindern könnten, weitgehend ausgeschaltet werden, da das Flugzeug 1 und die Triebwerke 2 - 5 praktisch allseitig abgeschlossen und abgeschirmt sind.

Durch Aufstellung der Leitelemente 6 zur Umlenkung der Abgasströme in kurzer Entfernung hinter dem Flugzeug 1 wird es möglich, die dahinter angeordnete Schallabsorptionswand 7 wirkunsvoll einzusetzen, ohne daß sie vom Abgasstrahl getroffen wird.

## Patentansprüche

1. Schutzanlage zur Schalldämmung großer Gasströme von Flugzeugtriebwerken, bei der im Abstand hinter den Triebwerken (2-5) ein schräg geneigtes, gitterförmgies Leitelement (6) aufgestellt ist, hinter dem eine kastenförmig ausgebildete hintere Schallabsorptionswand (7) von etwa der doppelten Höhe des Leitelementes (6) angeordnet ist, und bei der seitliche Schallabsorptionswände (8, 9) vorgesehen sind, die zusammen mit der hinteren Schallabsorptionswand (7) eine ein Flugzeug (1) angenähert hufeisenförmig umgebende Schallabsorptionswand bilden, dadurch gekennzeichnet, daß an den außen liegenden Kanten der vorderen Stirnseiten (14, 15) der seitlichen Schallabsorptionswände (8, 9) zwei kastenförmige, einen dreieckigen Ansatz (18, 19) am hinteren Ende aufweisende und mit Schallabsorptionswandungen (22, 23) versehene Torflügel (16, 17) um angenähert 60° nach innen um Schwenkachsen (20, 21) schwenkbar angelenkt sind, wobei in eingeschwenktem Zustand der Torflügel (16, 17) die Schallabsorptionswandungen (22, 23) spaltfrei an die seitlichen Absorptionswände (8, 9) anschließen und die Torflügel (16, 17) einen Spalt (a) für die Bugspitze des Flugzeuges (1) freilassen, und daß die Torflügel (16, 17) auf mehreren, konzentrisch zur jeweiligen Schwenkachse (20, 21) verlaufenden, teilkreisbogenförmig ausgebildeten Laufschienen (30-35) um die jeweilige Schwenkachse (20, 21) verfahrbar sind.

2. Schutzanlage nach Anspruch 1, dadurch gekennzeichnet, daß die Schallabsorptionswandungen (22, 23) mittig in den Torflügeln (16, 17) angeordnet sind.

3. Schutzanlage nach Anspruch 1 oder 2, dadurch gekennzeichnet, daß die Torflügel (16, 17) in den Laufschienen (30-35) mittels Fahrrollen (36, 37) abgestützt sind, die mittels Motoren (38) antreibbar sind.

4. Schutzanlage nach Anspruch 3, dadurch gekennzeichnet, daß die Motoren (38) entsprechend den Radien der Laufschienen (30-35) abgestuft synchronisiert sind.

## Claims

1. Protective facility for suppressing the noise of large, high-speed gas flows of aircraft engines, in which there is erected, at a distance behind the engines (2 - 5), an obliquely inclined, latticed directing element (6), behind which is disposed a box-type, rear sound absorption wall (7) of approximately twice the height of the directing element (6), and in which lateral sound absorption walls (8, 9) are provided, which combine with the rear sound absorption wall (7) to form a sound absorption wall surrounding the aircraft (1) approximately in the way of a horseshoe, characterized in that two box-type gates (16, 17), which are provided with sound absorption walls (22, 23) and the rear ends of which have a triangular extension (18, 19), are articulated to the exterior edges of the front ends (14, 15) of the lateral sound absorption walls (8, 9) in a manner to be pivotable inwards by approximately 60° about pivot axes (20, 21), the sound absorption walls (22, 23) gaplessly adjoining the lateral absorption walls (8, 9) when the gates (16, 17) are pivoted inwards and the gates (16, 17) leaving a gap (a) for the nose of the aircraft (1), and in that the gates (16, 17) are movable about the respective pivot axis (20, 21) on a plurality of rails (30 - 35), which are in the shape of a section of the arc of a circle, extending concentrically of the respective axis (20, 21).

2. Protective facility according to claim 1, characterized in that the sound absorption walls (22, 23) are disposed centrally in the gates (16, 17).

3. Protective facility according to claim 1 or 2, characterized in that the gates (16, 17) are guided in the rails (30 - 35) by rollers (36, 37) which are drivable by motors (38).

4. Protective facility according to claim 3, characterized in that the motors (38) are synchronized stepwise, corresponding to the radiuses of the rails (30 - 35).

## Revendications

1. Installation de protection pour amortir des bruits produits par des courants de gaz intenses de propulseurs d'avions, dans laquelle à distance et en arrière des propulseurs (2-5) est installé un élément de guidage (6) en forme de grille, incliné obliquement et en arrière duquel est disposée une paroi arrière d'absorption acoustique (7) agencée en forme de boîte et possédant une hauteur égale approximativement au double de la hauteur de l'élément de guidage (6), et dans laquelle sont prévues des parois latérales d'absorption acoustique (8,9), qui forment, conjointement avec la paroi arrière d'absorption acoustique (7), une paroi d'absorption acoustique entourant approximativement avec une forme de fer à cheval un avion (1), caractérisée en ce que deux battants de porte (16,17) en forme de boîtes, qui comportent un appendice saillant triangulaire (18,19) au niveau de l'extrémité arrière et sont équipés de parois d'absorption acoustique (22,23), sont articulés de manière à pouvoir pivoter sur 60° vers l'intérieur autour d'axes de pivotement (20,21), sur les bords extérieurs des faces frontales avant (14,15) des parois latérales d'absorption acoustiques (8,9), auquel cas, lorsque les battants de porte (16,17) sont à l'état fermé, les parois d'absorption acoustique (22,23) se raccordent, sans la présence d'aucune fente, aux parois latérales d'absorption (8,9) et les battants de porte (16,17) libèrent une fente (a) pour le nez de l'avion (1) et que les battants de porte (16,17) sont déplaçables, autour des axes respectifs de pivotement (20,21), sur plusieurs rails de roulement (30-35) agencés en forme d'arcs de cercle et s'étendant concentriquement par rapport aux axes de pivotement respectifs (20,21).

2. Installation de protection selon la revendication 1, caractérisée en ce que les parois d'absorption acoustique (22, 23) sont disposées au centre dans les battants de porte (16,17).

3. Installation de protection selon la revendication 1 ou 2, caractérisée en ce que les battants de porte (16,17) sont supportés par les rails de roulement (30-35) au moyen de galets de roulement (36,37), qui peuvent être entraînés au moyen de moteurs (38).

4. Installation de protection selon la revendication 3, caractérisée en ce que les moteurs (38) sont synchronisés d'une manière étagée en fonction des rayons des rails de roulement (30-35).
